# EUROPÄISCHE PATENTSCHRIFT

(11) **EP 1 124 675 B1**
(45) Veröffentlichungstag und Bekanntmachung des Hinweises auf die Patenterteilung: **24.07.2002**
(21) Anmeldenummer: 99970957.9
(22) Anmeldetag: 27.10.1999
(51) Int. Cl.: B29C 45/02, B29C 43/36

(54) **FORMGEBUNGSVERFAHREN ZUM HERSTELLEN VON KUNSTSTOFFTEILEN UND VORRICHTUNG ZUR DURCHFÜHRUNG DES VERFAHRENS**
SHAPING METHOD FOR PRODUCING PLASTIC PARTS AND DEVICE FOR CARRYING OUT SAID METHOD
PROCEDE DE MOULAGE POUR LA PRODUCTION DE PIECES EN PLASTIQUE ET DISPOSITIF POUR L'EXECUTION DE CE PROCEDE

(30) Priorität: 28.10.1998 DE 19849452; 09.06.1999 DE 19926319; 13.10.1999 DE 19949427
(43) Veröffentlichungstag der Anmeldung: 22.08.2001
(73) Patentinhaber: Stemke, Lothar, 04720 Döbeln (DE)
(72) Erfinder: Stemke, Lothar, 04720 Döbeln (DE)
(74) Vertreter: Bauer, Steffen
(86) Internationale Anmeldenummer: EP9908098
(87) Internationale Veröffentlichungsnummer: WO0024560

(56) Entgegenhaltungen:
- EP-A- 0 510 414
- US-A- 3 590 114
- US-A- 3 647 337

## Beschreibung

Die Erfindung betrifft das Gebiet des Urformens von Kunststoffteilen nach Art des Spritzprägens unter Verwendung eines mit der Form kommunizierenden Depotraums zur Zwischenspeicherung der Formmassenschmelze.

Die Verarbeitung von Kunststoffhalbfabrikaten wie Granulaten oder dgl. erfolgt. indem eine Schmelze bereitet und anschließend unter hohem Druck in eine Form gepreßt wird, in der die Masse erkaltet und nach Öffnen der Form die Formteile ausgeworfen werden. Die hierzu erforderlichen Drücke sind ein bedeutendes Kriterium für die konstruktive Ausführung der Maschinen und der Werkzeuge, vor allem hinsichtlich der zu beherrschenden Zuhaltekräfte. So stellt die Spritzgießtechnologie extrem hohe Ansprüche in dieser Richtung, wenn oberflächenstrukturierte Werkstücke sowie solche, die scharfkantiges Füllen erfordern, zu fertigen sind. Zur Reduzierung des Prozeßdruckes sind Lösungen bekannt, nach denen die Werkstoffschmelze vor dem eigentlichen Spritzen in einen Depotraum eingebracht und von diesem Depotraum in die Form überführt wird. So beschreibt die deutsche Patentanmeldung DE 196 31 209 A1 ein Verfahren und eine Vorrichtung zum Spritzgießen von Kunststoffteilen dieser Art, wonach eine vorbestimmte Menge einer Kunststoffschmelze über einen Angußkanal in einen Formhohlraum eines Werkzeuges eingebracht wird, wobei wenigstens ein Teil der Menge zunächst in einen im Werkzeug angeordneten Reserve-Hohlraum eingebracht und dann in den Formhohlraum überführt. Dabei kann das Volumen des Reserve-Hohlraums in etwa gleich oder kleiner als das Volumen der vorbestimmten Schmelzemenge sein. Ausgeführt wird dieses bekannte Verfahren mittels der beschriebenen Vorrichtung. Diese verfügt über ein Werkzeug mit einem Formhohlraum, einem an das Werkzeug anschließbaren Spritzaggregat und mindestens einen Kanal, der den Formhohlraum mit dem Spritzaggregat verbindet. Desweiteren verfügt das Werkzeug über einen Reserve-Hohlraum, der mit dem Kanal verbunden ist und mit Mitteln zur Überführung der Schmelze aus dem Reserve-Hohlraum in den Formhohlraum versehen ist. Eine als bevorzugt gekennzeichnete Version besteht darin, daß der Reserve-Hohlraum als Zylinderbohrung und die Überführungsmittel als in dem Zylinder axial verschieblicher Kolben ausgebildet sind, wobei die Überführung der Schmelze aus dem Reserve-Hohlraum in den Formraum durch Anlegen einer Kraft an den Kolben erfolgt, die mittels einer Druckfeder oder eines regelbaren Druckzylinders mit einem zweiten Kolben ausgeübt wird.

Nachteilig an der bekannten Lösung ist, daß eine nicht unerhebliche Menge der Formmassenschmelze unter hohem Druck unmittelbar aus dem Spritzzylinder in den Formhohlraum gelangt, bevor der Reserve-Hohlraum befüllt wird, so daß die Formmassenschmelze zu unterschiedlichen Zeiten in die Erstarrungsphase übergeht. Dies aber führt zu Gefügemängeln im Werkstück. Derartige Gefügemängel wirken sich bei der Herstellung von sehr flachen, d.h. also im wesentlichen zweidimensionalen Werkstücken wie Smart-Cards oder Compacct-Discs nicht in dem Maße aus wie bei der Herstellung von Werkstücken mit komplizierter Geometrie.

Eine andere Technologie ist das Spritzprägen. In der Firmenschrift der Hoechst AG Frankfurt/Main "Einführung in die Technologie der Kunststoffe" beschreibt Dipl.-Ing. Hans Domininghaus dieses Verfahren. Zur Herstellung großflächiger Spritzteile, welche die Kapazität einer Spritzgießmaschine insbesondere im Hinblick auf Schließ- und Spritzkraft übersteigen, wird das Werkzeug unter der Wirkung des Spritzdruckes um einen geringen Betrag aufgefahren. Nach dem Einspritzen des vollen Volumens wird in einem Prägehub die ganze Schließkraft aufgebracht. Voraussetzung für die Anwendung ist ein Tauchkolbenwerkzeug, das auch bei nicht ganz geschlossenen Werkzeughälften den Innenraum genügend abdichtet. Der vorteilhafte Effekt besteht in einer besseren Ausnutzung der Maschine und wegen des auf die gesamte Spritzfläche gleichmäßig wirkenden Nachdrucks in der Erzeugung spannungsärmerer Artikel. Mittels eines verwandten Verfahrens wird der Kapazitätsbereich einer Spritzgießmaschine erhöht und die Qualität der Artikel gesteigert, indem der Schwundausgleich mittels einer elastischen Holmendehnung im Hundertstelmillimeterbereich vorgenommen wird.

Nachteilig an den bekannten Versionen des Spritzprägeverfahrens ist der Umstand, daß die Werkzeughälften erst nach dem Einspritzen der Formmasse vollständig geschlossen werden, wodurch ein Überschuß an Formmasse in die Kavität eingebracht werden muß, der zur Gratbildung an den Quetschkanten der Werkzeughälften führt, so daß eine aufwendige mechanische Nachbearbeitung der Werkstücke erforderlich ist.

Die Verarbeitung von Kunststoffhalbfabrikaten wie Granulaten oder dgl. erfolgt, indem eine Schmelze bereitet und anschließend unter hohem Druck in eine Form gepreßt wird, in der die Masse erkaltet und nach Öffnen der Form die Formteile ausgeworfen werden. Die hierzu erforderlichen Drücke sind ein bedeutendes Kriterium für die konstruktive Ausführung der Maschinen und der Werkzeuge, vor allem hinsichtlich der zu beherrschenden Zuhaltekräfte. Insbesondere die Spritzgießtechnologie stellt extrem hohe Ansprüche in dieser Richtung, wenn oberflächenstrukturierte Werkstücke sowie solche, die scharfkantiges Füllen erfordern, zu fertigen sind.

Aus der deutschen Auslegeschrift 11 74 491 ist eine Spritzgießmaschine zur Verarbeitung thermoplastischer Kunststoffe bekannt, nach welcher die Spritzmasse nicht unmittelbar aus einer an einen Extruder angeschlossenen Spritzdüse in eine Form verbracht wird, sondern mittels eines Zylinders, in dem ein Kolben translatorisch beweglich angeordnet ist, ein Depot für die Spritzmasse zu bilden, das mittels des Kolbens in die Form entleert wird. Dafür verfügt der Kolben über einen Kanal, dessen Ausgang als Düse ausgebildet ist und mit einer Angußbohrung in der Form korrespondiert. Der Kolben ist an einem mit dem Extruderausgang starr verbundenen Joch über Rollen laufende Seile aufgehängt, wobei an den freien Seilenden Gegengewichte angeordnet sind. Der Kolbenhub entsteht, indem die Form gegen den Kolben gedrückt wird und diesen derart in den Zylinder verschiebt bis der Zylinder durch den Kolbenkanal in die über die Angußbohrung korrespondierende Form entleert ist. Die Gegengewichte haben dabei den Zweck, die Prozeßkräfte zu reduzieren.

Nachteilig an dieser bekannten Spritzgießmaschine ist, daß die Entleerung des Depots über einen sehr engen Weg erfolgt, der aus dem mit einer Düse abgeschlossenen Kolbenkanal und der korrespondierenden Angußbohrung entsteht, und deshalb hohe Prozeßkräfte aufgewendet werden müssen, die wiederum durch Einsatz der potentiellen Energie der Gegengewichte reduziert werden. Ein weiterer Nachteil besteht in dem technologischen Aufwand, die Angußkegel der entstehenden Spritzteile mechanisch beseitigen zu müssen.

Aus der Veröffentlichung der internationalen Anmeldung WO 98/09768, die auf der Priorität der südafrikanischen Anmeldungen 96/7509 und 97/4923 beruht, ist bekannt, einen Aufnahmeraum vorzusehen, in den die Schmelze eingebracht und anschließend mittels eines Stempels in die Formkavität gedrückt wird, um sowohl den Formenreichtum der Spritzgießtechnologie als auch durch Reduzierung der Betriebsdrücke größere Volumina und Formate als beim Spritzgießen herstellen zu können. Die bekannte Vorrichtung zur Herstellung von Formteilen umfaßt eine Übergabeeinheit, die einen Aufnahmeraum zur Aufnahme einer Charge Formmasse umgibt. Die Formmasse gelangt in granuliertem oder geschmolzenem Zustand durch einen beheizten Durchgang mittels einer Zuführspindel in eine Röhre und wird daraufhin mittels eines Stempels in den Aufnahmeraum verschoben. Daraufhin wird die Übergabeeinheit in eine zweite Stellung gebracht, in welcher der Aufnahmeraum mit einer Öffnung in einer Formplatte fluchtet. Die Öffnung steht in Verbindung mit einer Spritzkavität in der Form des herzustellenden Formteiles. In dieser Stellung der Übergabeeinheit verschiebt ein zweiter Stempel die Charge geschmolzene Formmasse aus dem Aufnahmeraum heraus durch die Öffnung in die Spritzkavität. In der Füllstellung zeigt sich der Aufnahmeraum einseitig geöffnet, so daß der erste Stempel die Formmasse hineinschieben kann. In der Entleerungsstellung ist der Aufnahmeraum zweiseitig geöffnet, so daß sowohl der Ausschiebestempel eintauchen als auch die Formmasse den Aufnahmeraum verlassen kann. Der Positionswechsel der Übergabeeinheit von der Füllstellung in die Entleerungsstellung kann translatorisch oder nach Art eines 2-Wege-Ventils rotatorisch erfolgen.

Nachteilig an dieser bekannten Vorrichtung ist der Umstand, daß die Übergabeeinheit mittels eines speziellen Antriebes verschoben wird, wodurch konstruktiv und steuerungstechnisch ein beträchtlicher Aufwand entsteht.

Den fortgeschrittendsten Stand der Technik stellt die Lösung nach der internationalen Anmeldung WO 98/09768 dar, so daß die Erfindung von dieser Lösung abzugrenzen ist.

Die Aufgabe der Erfindung besteht darin, das Spritzprägeverfahren der genannten Art so zu verbessern, daß Gefügemängel ausgeschlossen werden und der Aufwand für die mechanische Nachbearbeitung der Werkstücke minimiert wird sowie den konstruktiven und steuerungstechnischen Aufwand bei Formgebungseinrichtungen mit arbeitsdruckreduzierender Vordosierung der Formmassen zu senken.

Die Aufgabe wird erfindungsgemäß gelöst, indem die geschmolzene Formmasse vor der Formgebung in einem Formraum in einen hinsichtlich seines Volumens mit dem Volumen des Formraums nahezu übereinstimmenden Depotraum eingebracht wird, der als Zylinder ausgebildet und mit dem Formraum in der Weise kommunizierend verbunden ist, der Depotraum übergangslos in den Formraum mündet, und die Formmasse mittels eines in dem Depotraum axial verschieblichen Kolbens aus dem Depotraum in den Formraum befördert wird. Zu Beginn des Spritzprozesses befindet sich der Kolben in einem ersten Totpunkt, in dem der Kolbenboden mit dem Rand des Depotraums und derart mit der Formraumwandung fluchtet, so daß eine geringe Menge Formmassenschmelze direkt in den Formraum gelangt. Sodann gleitet der Kolben in den Zylinder. Hierbei wird der kontinuierlich größer werdende Depotraum nahezu drucklos mit Formmassenschmelze in der Weise ausgefüllt, daß die Formmassenschmelze stets in die plastische Seele befördert wird, bis der Kolben seine zweite Totpunktstellung erreicht. In diesem Zeitpunkt wird die Zufuhr der Formmassenschmelze beendet. Nachfolgend wird der Kolben bis kurz vor seine erste Totpunktstellung verfahren und so der Formraum vollständig mit Formmasse ausgefüllt. Zum Schwundausgleich wird während der Haltezeit der Kolben in die erste Totpunktstellung gebracht.
Vorteilhaft weitergeführt wird die Erfindung, wenn das Ausschieben der Formmasse aus dem Depotraum in den Formraum in der Weise erfolgt, daß mit Zunahme des Verfahrweges des Kolbens von der zweiten Totpunktstellung bis kurz vor die erste Totpunktstellung die Verfahrgeschwindigkeit abnimmt.

Auch ist es von Vorteil, daß das maximale Volumen des Depotraums geringfügig größer ist als das Volumen des Formraums, wodurch der Schwundausgleich durch Nachschieben von Formmasse aus dem Depotraum erfolgen kann.

Eine vorteilhafte Ausgestaltung erfährt die Erfindung dadurch, daß die Formmassenschmelze durch einen im Innern des Kolbens verlaufenden und im Kolbenboden mündenden Kanal in den Depotraum gelangt.

Das erfindungsgemäße Formgebungsverfahren zeichnet sich dadurch aus, daß die Füllung des Depotraums nahezu drucklos erfolgt. Das Volumen des Depotraums stimmt zu jedem Zeitpunkt mit dem Volumen der eingespritzten Formmasse überein, so daß die Schmelze frei von Lufteinschlüssen bleibt. Da die Formmasse stets in die plastische Seele der im Depotraum befindlichen Schmelze gespritzt wird, wird das Entstehen eines Freistrahls, dessen insbesondere an der Wandung des Form- und des Depotraums wahrnehmbare schnelle Abkühlung zu Gefügestörungen führen würde, sowie von Bindenähten verhindert. Einhergehend mit der Abnahme der Verfahrgeschwindigkeit des Kolbens bei der Überführung der Formmasse aus dem Depotraum in den Formraum sowie dem Schwundausgleich während der Haltezeit durch das Nachschieben von Formmasse aus dem Depotraum in den Formraum unter hohem Druck erhält das gefertigte Werkstück ein homogenes Gefüge. Da die Werkzeughälften während des gesamten Formgebungsprozesses geschlossen bleiben, sind Quetschkanten entbehrlich, so daß ein Grat nicht entstehen kann.

Für die Durchführung des erfindungsgemäßen Verfahrens wird eine Vorrichtung vorgeschlagen, die als Dosiervorrichtung an Formgebungsmaschinen mit Formmassenbereitungseinrichtung und Formkavität ausgebildet ist. Die Formkavität wird mittels einer ersten und einer zweiten Formplatte gebildet und mit Formmasse ausgefüllt. Der Ausgang der Formmassenbereitungseinrichtung ist mit einem in seinem Volumen veränderbaren Aufnahmeraum verbunden, der wiederum mittels einer Öffnung mit der Formkavität verbunden ist. Der Aufnahmeraum entsteht in einer Buchse zwischen der Stirnfläche eines darin translatorisch beweglich angeordneten Stempels und der Formkavität. Wenn der Stempel die hintere Endstellung einnimmt, weist der Aufnahmeraum ein Volumen auf, das wenigstens so groß ist wie das Volumen der Formkavität. Der Stempel dient zum Verschieben der Formmasse aus dem Aufnahmeraum in die Formkavität. Wenn der Stempel eine vordere Stellung einnimmt, ist seine Stirnfläche mit dem Rand der Öffnung bündig. Der Stempel ist mit der Formmassenbereitungseinrichtung mechanisch starr verbunden und mit einem Kanal versehen, in den der Ausgang der Formmassenbereitungseinrichtung mündet. Die Buchse ist als Bestandteil der ersten Formplatte ausgeführt und verfügt über eine erste Öffnung, in die der Stempel eintaucht, und eine zweite Öffnung, die der ersten Öffnung gegenüber angeordnet ist. Die zweite Öffnung bildet derart die Verbindung mit der Formkavität, daß die Buchse ohne Verengung in die Formkavität mündet. Der Stempel ist mit einem Anschlag versehen, der in der vorderen Endstellung des Stempels auf dem die erste Öffnung der Buchse umgebenden Rand aufliegt.

Weitergebildet ist die erfindungsgemäße Vorrichtung dadurch, daß eine Vielzahl von Buchsen und eine gleiche Vielzahl von Stempeln vorgesehen ist. Die Stempel sind an einem Heißkanalbalken befestigt, der mit der Formmassenbereitungseinrichtung verbunden ist und wenigstens einen Heißkanal aufweist, in den der Ausgang der Formmassenbereitungseinrichtung mündet. Die Kanäle der Stempel sind mit dem Heißkanal verbunden. Der Heißkanalbalken bildet den Anschlag zur Beendigung der Relativbewegung zwischen dem Stempel und der Buchse.

Vorteilhafte Ausgestaltungen der erfindungsgemäßen Vorrichtung sind in den Unteransprüchen dargestellt.

Durch die Verbindung mit dem Ausgang der Formmassenbereitungseinrichtung befindet sich der Stempel in der hinteren Stellung, wenn sich die Formmassenbereitungseinrichtung in der von der Form entfernten Stellung befindet. In dieser hinteren Stellung des Stempels ist der Aufnahmeraum aufgespannt und mit Formmasse gefüllt. Mit dem Vorschub der Formmassenbereitungseinrichtung wird der Stempel aus der hinteren Stellung translatorisch in Richtung auf die Formkavität in der Buchse geführt bewegt, wodurch das Volumen des Aufnahmeraums verringert und die Formmasse aus dem Aufnahmeraum durch die zweite Öffnung der Buchse in die Formkavität gedrückt wird. Der hierfür erforderliche Druck ist gegenüber dem bei der herkömmlichen Spritzgießtechnologie aufzuwendenden Druck auf unter 30 % reduziert, so daß einerseits kleinere Formmassenbereitungseinrichtungen einsetzbar sind und andererseits hinsichtlich der Stabilität des die Formkavität umhüllenden Werkzeuges entsprechend geringerer Aufwand zu treiben ist und deshalb seine Beschaffenheit und Komplexität in weiteren Grenzen gestaltet werden können. Nach dem Erreichen der vorderen Endstellung des Stempels, die mittels des Anschlags des Stempels am Rand der ersten Öffnung der Buchse bestimmt ist, ist das Volumen des Aufnahmeraumes im Minimum. Die Charge Formmasse befindet sich vollständig in der Formkavität, so daß die Abkühlung der Formmasse und nachfolgend der Auswurf des Werkstücks erfolgt.

Zur Erhaltung oder zum Erreichen einer geeigneten Konsistenz der Formmasse wird vorteilhafterweise der Kanal im Stempel und/oder der Aufnahmeraum beheizt, solange die Formmasse nicht vollständig in die Formkavität eingebracht ist.

Zur Kühlung des Stempels in der Buchse dient erfindungsgemäß ein an einen Kühlkreis angeschlossener, vorteilhafterweise hohlzylinderförmig zwischen der Heizung und der Mantelfläche des Stempels angeordneter Wärmetauscher. Die Kühlung erfolgt vorzugsweise mittels einer in einem Kühlkreis strömenden Flüssigkeit, wobei der Kühlkreis mit einer Regelung ausgestattet sein kann.

Die erfindungsgemäß vorgesehene Kühlung der zweiten Formplatte verbessert die Formstabilität der Formkavität und damit die Qualität insbesondere der Oberfläche der zu formenden Werkstücke. Der in der zweiten Formplatte vorteilhafterweise gegenüber der zweiten Öffnung der Buchse vorzugsweise flächig angeordnete Wärmetauscher kann an den gleichen Kühlkreis wie der in dem Stempel befindliche Wärmetauscher angeschlossen sein.

Die erfindungsgemäße Dosiervorrichtung zeichnet sich durch schnelle Abfuhr der entstehenden Wärme aus, indem wenigstens die Stirnfläche des Stempels und/oder der der zweiten Buchsenöffnung gegenüberliegende Bereich der zweiten Formplatte eine gute Wärmeleitfähigkeit aufweisen und mit den Wärmetauschern thermisch gekoppelt sind.

Die Weiterführung der Erfindung in Form einer Vielzahl von Buchsen und Stempeln ist durch eine analoge Wirkungsweise gekennzeichnet. Mittels der Relativbewegung zwischen den Stempeln und den Buchsen gelangen die Stirnflächen der Stempel aus der hinteren Stellung bis zur Begrenzung der Formkavität, wodurch das Volumen des Aufnahmeraums verringert und die Formmasse aus dem Aufnahmeraum durch die zweite Öffnung der Buchse in die Formkavität gedrückt wird. Nach dem Erreichen der vorderen Endstellung der Stempel ist das Volumen der Aufnahmeräume im Minimum. Die Charge Formmasse befindet sich vollständig in der Formkavität, so daß die Abkühlung der Formmasse und nachfolgend der Auswurf des Werkstücks erfolgt. Die Relativbewegung zwischen den Stempeln und Buchsen kann sowohl durch Bewegung der am Heißkanalbalken befestigten Stempel, etwa durch Ausnutzen des Vorschubs der Formmassenbereitungseinrichtung, als auch durch Bewegung der die Formkavität bildenden und die Buchsen aufweisenden Formplatteneinheit, etwa durch eine entsprechende Ausgestaltung des Auswurfantriebs, realisiert werden.

Mit der Beheizung des Heißkanalbalkens wird ein prozeßgerechtes Fließen der Formmasse gesichert. Selbstverständlich können die einzelnen Aufnahmeräume hierbei unterschiedliche Volumina aufweisen.

Nachfolgend wird die Erfindung in Form eines bevorzugten Ausführungsbeispiels anhand der Zeichnung näher erläutert. Die Zeichnung zeigt in
- Fig. 1: eine Vorrichtung nach der Erfindung während der Dosierphase;
- Fig. 2: eine Vorrichtung nach der Erfindung nach Abschluß der Formgebung und
- Fig. 3: eine Weiterbildung der Vorrichtung nach der Erfindung während der Dosierphase.

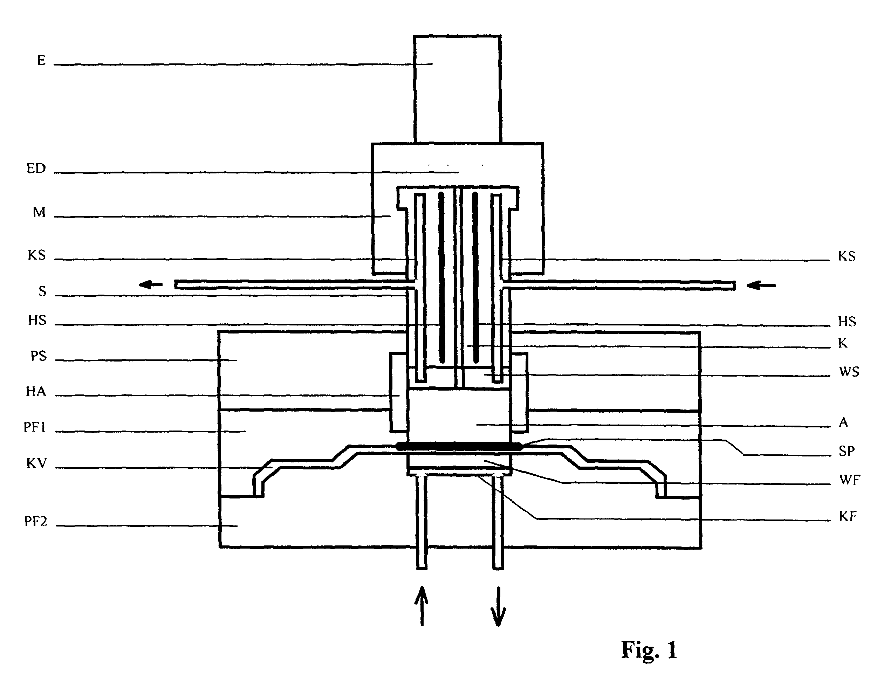

Die Darstellung in Fig. 1 zeigt einen Extruderausgang E mit einer Extruderdüse ED. Mit dem Extruderausgang E ist mittels einer Überwurfmutter M ein Stempel S fest verbunden. Der Stempel S taucht in eine erste Öffnung einer in einem Werkzeug, das aus einer ersten Formplatte PF1 und einer zweiten Formplatte PF2 besteht, sowie einer Werkzeugaufspannplatte PS eingelassenen Buchse ein. Die in der Buchse befindliche Stirnfläche des Stempels S besteht aus wärmeleitfähigem Material WS. Zwischen der ersten Formplatte PF1 und der zweiten Formplatte PF2 ist eine die Form des Werkstücks bildende Formkavität KV dargestellt, die mit der zweiten Öffnung der Buchse verbunden ist. Der Stempel S verfügt über einen Kanal K, in den die Extruderdüse ED mündet und dessen Austritt in der Stirnfläche des Stempels S vorgesehen ist. Der Kanal K ist auf nahezu seiner gesamten Länge umgeben von einer vorzugsweise regelbaren Heizung HS. Zwischen der Heizung HS und der äußeren Mantelfläche des Stempels ist ein mit einem Kühlkreis verbundener Flüssigkeitswärmetauscher KS angeordnet. Gegenüber der zweiten Öffnung der Buchse besteht die zweite Formplatte PF2 wie die Stirnfläche des Stempels S aus wärmeleitfähigem Material WF, das in thermischem Kontakt mit einem Flüssigkeitswärmetauscher KF steht, welcher an den im Zusammenhang mit der Kühlung des Stempels S genannten Kühlkreis angeschlossen ist. Da der Extruderausgang E und damit der Stempel S eine hintere Stellung einnimmt, ist zwischen der Stirnfläche des Stempels S und der Formkavität KV in der Buchse ein Aufnahmeraum A aufgespannt. Die den Aufnahmeraum A mit der Formkavität KV verbindende Öffnung ist mittels eines Schiebers SP verschlossen. In der Buchsenwandung ist in dem Bereich des Aufnahmeraumes A eine als Band ausgeführte regelbare Heizung HA angeordnet.

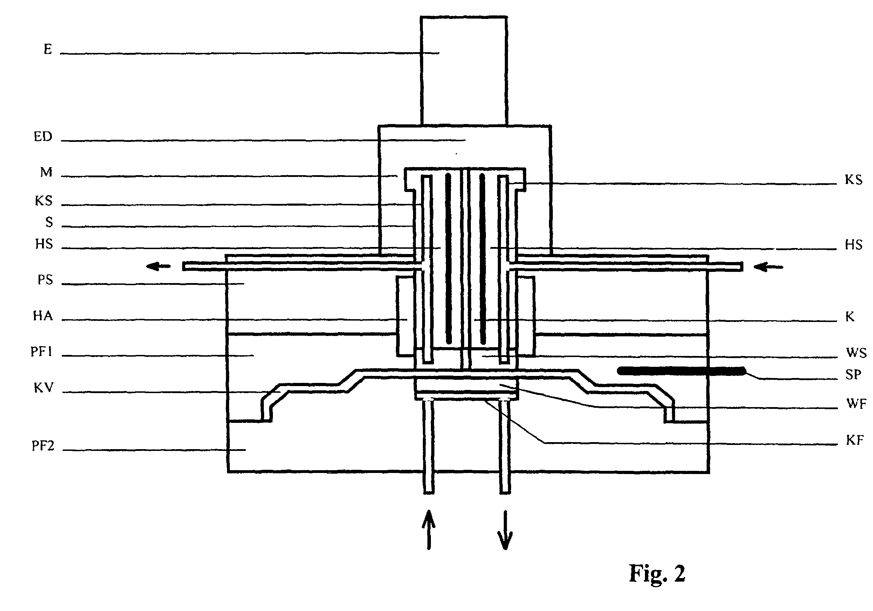

Fig. 2 zeigt die erfindungsgemäße Dosiervorrichtung nach Abschluß der Formgebung. Der Unterschied zu der Dosierphase nach Fig. 1 besteht darin, daß der Stempel S eine vordere Stellung einnimmt. Die vordere Stellung des Stempels S ist mittels des von der Überwurfmutter M gebildeten Anschlags an der Werkzeugaufspannplatte PS definiert. In der vorderen Stellung fluchtet die Stirnfläche des Stempels S mit der zweiten Öffnung der Buchse und damit mit der Formkavität KV, wobei der Schieber SP zurückgezogen ist, so daß der Aufnahmeraum A beseitigt und die Formmasse stattdessen die Formkavität KV ausfüllt. Eine Verbesserung der Gleitfähigkeit des Stempels S in der Buchse kann durch einen geringfügigen axialen Versatz des Stempels S erreicht werden, der mittels der Überwurfmutter M ausgeglichen wird. Der Stempel S wird gekühlt, indem der Wärmetauscher KS von Kühlflüssigkeit durchströmt wird. Die Kühlung des Stempels S hat in Zusammenwirkung mit der Kühlung der zweiten Formplatte PF2 im Bereich gegenüber der zweiten Öffnung der Buchse mittels des von einer Kühlflüssigkeit durchströmten Wärmetauschers KF zur Folge, daß der Formmasse Wärme entzogen und dadurch die Abkühlung des Werkstücks beschleunigt wird. Besonders wirkungsvoll vollzieht sich der Abkühlungsvorgang durch die gute Wärmeleitfähigkeit der Bereiche WS und WF.

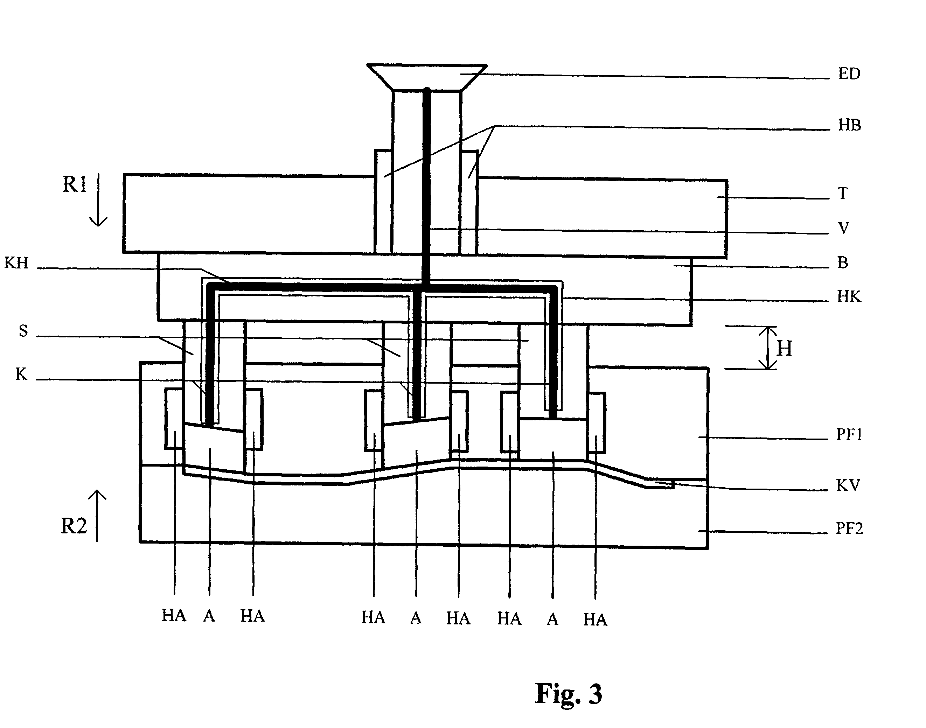

Die Darstellung nach Fig. 3 beinhaltet eine Weiterführung der erfindungsgemäßen Vorrichtung, wonach eine Vielzahl von Depoträumen A und eine gleiche Anzahl Kolben S vorgesehen sind. An einer Extruderdüse ED ist ein Träger T befestigt. Mit dem Träger T ist ein Heißkanalbalken B verbunden. an dem wiederum eine Vielzahl Stempel S angebracht sind. Von der Extruderdüse ED führt ein Verbindungskanal V zu einem im Heißkanalbalken B angeordneten Heißkanal KH. An den Heißkanal KH sind die Kanäle K der Stempel S angeschlossen. Die Extruderdüse ED ist von einem Heizband HB umgeben, das regelbar ausgeführt ist. Dem Heißkanal KH und den Kanälen K der Stempel S ist eine regelbare Kanalheizung HK zugeordnet. Gegenüber dieser Anordnung befindet sich ein aus einer ersten Formplatte PF1 und einer zweiten Formplatte PF2 bestehendes Spritzwerkzeug. Die Formplatten Pfl und PF2 umschließen eine Formkavität KV, die das Negativ des herzustellenden Werkstücks bildet. In der ersten Formplatte PF1 befindet sich eine Vielzahl Buchsen, in welche die Stempel S eintauchen, wobei zwischen den freien Stirnflächen der Stempel S und den in die Formkavität KV übergehenden Buchsenöffnungen Aufnahmeräume A aufgespannt sind. Die Aufnahmeräume A umschließend sind Aufnahmeraumheizungen HA in die erste Formplatte PF1 integriert.

Die Formmasse gelangt aus der Extruderdüse ED durch den Verbindungskanal V in den Heißkanal KH. Der Heißkanal KH dient zur Verteilung der Formmasse in die Kanäle K der Stempel S, von denen die Formmasse in die Aufnahmeräume A gedrückt wird. Nach dem Füllen der Aufnahmeräume A ist die Dosierphase abgeschlossen. Durch eine erste Translation R1, die eine Vorschubbewegung der Extruderdüse ED und der mit ihr verbundenen Bauteile Träger T, Heißkanalbalken KH und der Stempel S in Richtung auf das aus den Formplatten PF1 und PF2 bestehende Werkzeug darstellt, oder eine zweite Translation R2, die eine Vorschubbewegung des aus den Formplatten PF1 und PF2 bestehenden Werkzeugs in Richtung auf die Extruderdüse ED und die mit ihr verbundenen Bauteile Träger T, Heißkanalbalken KH und Stempel S darstellt. wird die Formmasse aus den Aufnahmeräumen A mittels der Stirnseiten der nunmehr in den Buchsen gleitenden Stempel S in die Formkavität KV gedrückt, bis der Heißkanalbalken B und die ihm zugewandte Fläche der ersten Formplatte PF1 nach Absolvierung eines Hubes H aneinanderstoßen. Die Volumina der Aufnahmeräume A können ebenso unterschiedlich sein wie die Stirnflächen der Stempel S unterschiedlich ausgebildet sein können, da in den einzelnen Aufnahmeräume A die Formmasse für unterschiedliche Bereiche der Formkavität KV dosiert wird. Nach dem Erstarren der Formmasse wird das fertige Werkstück in bekannter Weise ausgeworfen, indem die Formplatten PF1 und PF2 voneinander getrennt werden. Vorteilhafterweise können Kühleinrichtungen sowie Wärmeableitbereiche vorgesehen sein, um die Abkühlung des Werkstücks zu beschleunigen und damit die Fertigungszeit zu verkürzen.

## Patentansprüche

1. Formgebungsverfahren zum Herstellen von Kunststoffteilen, bei dem die geschmolzene Formmasse vor der Formgebung in einem Formraum (KV) in einen hinsichtlich seines Volumens mit dem Volumen des Formraums (KV) nahezu übereinstimmenden Depotraum (A) eingebracht wird, der als Zylinder ausgebildet und mit dem Formraum (KV) in der Weise kommunizierend verbunden ist, daß der Depotraum (A) übergangslos in den Formraum (KV) mündet, und die Formmasse mittels eines in dem Depotraum (A) axial verschieblichen Kolbens (S) aus dem Depotraum (A) in den Formraum (KV) befördert wird, **dadurch gekennzeichnet, daß**
- sich zu Beginn des Spritzprozesses der Kolben (S) in einem ersten Totpunkt befindet, in dem der Kolbenboden mit dem Rand des Depotraums (A) und derart mit der Formraumwandung fluchtet, so daß eine geringe Menge Formmassenschmelze direkt in den Formraum (KV) gelangt,
- sodann der Kolben (S) in den Zylinder gleitet und hierbei der kontinuierlich größer werdende Depotraum (A) nahezu drucklos mit Formmassenschmelze ausgefüllt wird, bis der Kolben (S) seine zweite Totpunktstellung erreicht und die Zufuhr der Formmassenschmelze beendet wird,
- nachfolgend der Kolben (S) nahezu bis zu der ersten Totpunktstellung verfahren und so der Formraum (KV) vollständig mit Formmasse ausgefüllt wird und während der Haltezeit der Kolben (S) in die erste Totpunktstellung gebracht wird.

2. Formgebungsverfahren nach Anspruch 1, **dadurch gekennzeichnet, daß** mit Zunahme des Verfahrweges des Kolbens (S) von der zweiten Totpunktstellung bis kurz vor die erste Totpunktstellung die Verfahrgeschwindigkeit abnimmt.

3. Formgebungsverfahren nach Anspruch 1 oder 2, **dadurch gekennzeichnet, daß** das maximale Volumen des Depotraums (A) geringfügig größer ist als das Volumen des Formraums (KV).

4. Formgebungsverfahren nach Anspruch 1, 2 oder 3, **dadurch gekennzeichnet, daß** die Formmassenschmelze durch einen im Innern des Kolbens (S) verlaufenden und im Kolbenboden mündenden Kanal (K) in den Depotraum (A) gelangt.

5. Dosiervorrichtung für Formgebungsmaschinen mit einer Formmassenbereitungseinrichtung und einer mittels einer ersten und einer zweiten Formplatte (PF1, PF2) gebildeten Formkavität (KV), die mit Formmasse ausgefüllt wird, wobei der Ausgang (E) der Formmassenbereitungseinrichtung mit einem in seinem Volumen veränderbaren Aufnahmeraum (A) verbunden ist, dessen größtes Volumen wenigstens dem Volumen der Formkavität (KV) entspricht, der Aufnahmeraum (A) mittels einer Öffnung mit der Formkavität (KV) verbunden ist und in einer Buchse zwischen der Stirnfläche eines Stempels (S), der translatorisch beweglich in der Buchse angeordnet zum Verschieben der Formmasse aus dem Aufnahmeraum (A) in die Formkavität (KV) dient und zur Befüllung des Aufnahmeraums (A) mit einem durchgehenden Kanal (K) versehen ist, und der Formkavität (KV) entsteht, wenn der Stempel (S) eine hintere Stellung einnimmt, und die Stirnfläche des Stempels (S) mit dem Rand der Öffnung bündig ist, wenn der Stempel (S) eine vordere Stellung einnimmt, **dadurch gekennzeichnet, daß** der Stempel (S) mit der Formmassenbereitungseinrichtung (E) mechanisch starr verbunden ist, die als Bestandteil der ersten Formplatte (PF1) ausgebildete Buchse über eine erste Öffnung, in welche der Stempel (S) eintaucht, und eine zweite Öffnung, die der ersten Öffnung gegenüber angeordnet und mit der Formkavität (KV) unmittelbar verbunden ist, verfügt, und der Stempel (S) mit einem Anschlag (M) versehen ist, der in der vorderen Endstellung des Stempels (S) auf dem die erste Öffnung der Buchse umgebenden Rand aufliegt.

6. Dosiervorrichtung nach Anspruch 5. **dadurch gekennzeichnet, daß** der Stempel (S) wenigstens an seinem freien Ende aus wärmeleitfähigem Material (WS) besteht.

7. Dosiervorrichtung nach Anspruch 5 oder 6, **dadurch gekennzeichnet, daß** der Stempel (S) mit einem Wärmetauscher (KS) versehen ist, der in einen Kühlkreis eingebunden ist.

8. Dosiervorrichtung nach Anspruch 7, **dadurch gekennzeichnet, daß** der Wärmetauscher (KS) wenigstens mit der Stirnfläche des Stempels (S) thermisch gekoppelt ist.

9. Dosiervorrichtung nach Anspruch 7 oder 8, **dadurch gekennzeichnet, daß** der Kühlkreis mit dem eingebundenen Wärmetauscher (KS) regelbar ausgeführt ist.

10. Dosiervorrichtung nach einem der Ansprüche 5 bis 9, **dadurch gekennzeichnet, daß** die zweite Formplatte (PF2) wenigstens im der zweiten Öffnung der Buchse gegenüberliegenden Bereich aus wärmeleitfähigem Material (WF) besteht.

11. Dosiervorrichtung nach einem der Ansprüche 5 bis 10, **dadurch gekennzeichnet, daß** die zweite Formplatte (PF2) mit einem Wärmetauscher (KF) versehen ist, der in cinen Kühlkreis eingebunden ist.

12. Dosiervorrichtung nach Anspruch 11, **dadurch gekennzeichnet, daß** der Wärmetauscher (KF) mit dem aus wärmeleitfähigem Material (WF) bestehendem Bereich der zweiten Formplatte (PF2) thermisch gekoppelt ist.

13. Dosiervorrichtung nach Anspruch 11 oder 12, **dadurch gekennzeichnet, daß** der Kühlkreis mit dem eingebundenen Wärmetauscher (KF) regelbar ausgeführt ist.

14. Dosiervorrichtung nach einem der Ansprüche 5 bis 13, **dadurch gekennzeichnet, daß** als Anschlag (M) des Stempels (S) eine auf den Ausgang (ED) der Formmassenbereitungseinrichtung (E) aufgeschraubte Überwurfmutter mit Schaft dient.

15. Dosiervorrichtung nach einem der Ansprüche 5 bis 14, **dadurch gekennzeichnet, daß** die zweite Öffnung der Buchse mechanisch verschlossen ist, wenn der Stempel (S) die hintere Endstellung einnimmt.

16. Dosiervorrichtung nach einem der Ansprüche 5 bis 15, **dadurch gekennzeichnet, daß** eine Vielzahl von Buchsen und eine gleiche Vielzahl von Stempeln (S) vorgesehen ist, die Stempel (S) an einem Heißkanalbalken (B) befestigt sind, der Heißkanalbalken (B) mit der Formmassenbereitungseinrichtung verbunden ist, der Heißkanalbalken (B) wenigstens einen Heißkanal (KH) aufweist, in den der Ausgang (ED) der Formmassenbereitungseinrichtung mündet, die Kanäle (K) der Stempel (S) mit dem Heißkanal (KH) verbunden sind und der Heißkanalbalken (B) den Anschlag zur Beendigung der Relativbewegung zwischen den Stempeln (S) und den Buchsen bildet.

17. Dosiervorrichtung nach Anspruch 16, **dadurch gekennzeichnet, daß** ein Heißkanal (KH) mit einer der Anzahl der Stempel (S) und Buchsen entsprechenden Anzahl von in die Stempelkanäle (K) mündenden Ausgängen vorgesehen ist.

18. Dosiervorrichtung nach Anspruch 16. **dadurch gekennzeichnet, daß** eine der Anzahl der Stempel (S) und Buchsen entsprechende Anzahl sternartig angeordneter Heißkanäle (KH) die Mündung des Ausgangs (ED) der Formmassenbereitungseinrichtung mit den Stempelkanälen (K) verbindet.

19. Dosiervorrichtung nach Anspruch 16, 17 oder 18, **dadurch gekennzeichnet, daß** der Heißkanalbalken (B) mit einer Heizvorrichtung (HK) versehen ist.

20. Dosiervorrichtung nach Anspruch 19, **dadurch gekennzeichnet, daß** die Heizvorrichtung (HK) regelbar ist.

## Claims

1. Molding process for the production of plastic parts in which the molten molding material is fed, before molding in a mold cavity (KV), into a repository space (A), implemented as a cylinder and communicating with the mold cavity (KV) in such a way that the repository space (A) discharges without transition into the mold cavity (KV), whose volume nearly corresponds with the volume of the mold cavity (KV), and the molding material is conveyed out of the repository space (A) into the mold cavity (KV) by means of a piston (S) which is axially displaceable in the repository space (A), **characterized in that**
- at the beginning of the injection process, the piston (S) is at a first dead center, at which the bottom of the piston aligns with the edge of the repository space (A) and with the wall of the mold cavity in such a way that a small amount of molding material melt reaches the mold cavity (KV) directly,
- the piston (S) then slides into the cylinder and the repository space (A), which becomes larger continuously, is filled with molding material melt at almost no pressure until the piston (S) reaches its second dead center position and the supply of the molding material melt is ended,
- the piston (S) is then moved almost to the first dead center position and the mold cavity (KV) is thus completely filled with molding material, and
- during the dwell time, the piston (S) is brought into the first dead center position.

2. Molding process according to claim 1, **characterized in that** as the movement path of the piston (S) from the second dead center position to shortly before the first dead center position increases, its movement speed decreases.

3. Molding process according to claim 1 or 2, **characterized in that** the maximum volume of the repository space (A) is slightly larger than the volume of the mold cavity (KV).

4. Molding process according to claim 1, 2, or 3, **characterized in that** the molding material melt reaches the repository space (A) through a channel (K) running through the inside of the piston (S) and discharging in the bottom of the piston.

5. Dosing device for molding machines having a molding material preparation device and a mold cavity (KV), formed by means of a first and a second mold plate (PF1, PF2), which is filled up with molding material, with the outlet (E) of the molding material preparation device connected with an accommodation space (A) whose volume can be changed and whose largest volume corresponds to at least volume of the mold cavity (KV), the accommodation space (A) connected by means of the opening with the mold cavity (KV) and occurring in a bushing between the face of a plunger (S), which is translationally movable in the bushing to serve for displacement of the molding material out of the accommodation space (A) into the mold cavity (KV) and provided with a through channel (K) for filling of the accommodation space (A), and the mold cavity (KV) when the plunger (S) assumes a rear position, and the face of the plunger (S) is flush with the edge of the opening when the plunger (S) assumes a forward position, **characterized in that** the plunger (S) is rigidly mechanically connected with the molding material preparation device (E), the bushing implemented as a component of the first molding plate (PF1) has available a first opening into which the plunger (S) dips and a second opening located opposite to the first opening and directly connected with the mold cavity (KV), and the plunger (S) is provided with a stop (M) which presses against the edge surrounding the first opening of the bushing in the forward position of the plunger (S).

6. Dosing device according to claim 5, **characterized in that** the plunger (S) consists of thermally conducting material (WS) on at least its free end.

7. Dosing device according to claim 5 or 6, **characterized in that** the plunger is provided with a heat exchanger (KS) which is connected into a cooling circuit.

8. Dosing device according to claim 7, **characterized in that** the heat exchanger (KS) is thermally coupled with at least the face of the plunger (S).

9. Dosing device according to claim 7 or 8, **characterized in that** the cooling circuit with the connected heat exchanger (KS) is implemented as adjustable.

10. Dosing device according to one of the claims 5 to 9, **characterized in that** the second mold plate (PF2) consists of thermally conductive material (WF) in at least the region lying opposite to the second opening of the bushing.

11. Dosing device according to one of the claims 5 to 10, **characterized in that** the second mold plate (PF2) is provided with a heat exchanger (KF) connected into a cooling circuit.

12. Dosing device according to claim 11, **characterized in that** the heat exchanger (KF) is thermally coupled with the region of the second mold plate (PF2) consisting of thermally conductive material (WF).

13. Dosing device according to claim 11 or 12, **characterized in that** the cooling circuit with the connected heat exchanger (KF) is implemented as adjustable.

14. Dosing device according to one of the claims 5 to 13, **characterized in that** a union nut with a shank, which is screwed on to the outlet (ED) of the molding material preparation device (A), serves as the stop (M) of the plunger (S).

15. Dosing device according to one of the claims 5 to 14, **characterized in that** the second opening of the bushing is closed mechanically when the plunger (S) assumes the rear end position.

16. Dosing device according to one of the claims 5 to 15, **characterized in that** a number of bushings and an equal number of plungers (S) are provided, the plungers (S) are attached to a hot runner girder (B), the hot runner girder (B) is connected with the molding material preparation device, the hot runner girder (B) has at least one hot runner (H) into which the outlet (ED) of the molding material preparation device discharges, the channels (K) of the plungers (S) are connected with the hot runner (KH), and the hot runner girder (B) forms the stop for ending of the relative motion between the plungers (S) and the bushings.

17. Dosing device according to claim 16, **characterized in that** a hot runner (KH) is provided with a number of outlets, which discharge into the plunger channels (K), corresponding to the number of plungers (S) and bushings.

18. Dosing device according to claim 16, **characterized in that** a number of hot runners (KH), positioned in a star shape, which corresponds to the number of the plungers (S) and bushings, connect the discharge of the outlet (ED) of the molding material preparation device with the plunger channels (K).

19. Dosing device according to claim 16, 17, or 18, **characterized in that** the hot runner girder (B) is provided with a heating device (HK).

20. Dosing device according to claim 19, **characterized in that** the heating device (HK) is adjustable.

## Revendications

1. matière plastique, dans lequel la masse de moulage fondue est introduite, avant le formage dans une cellule de formage (KV), dans une cellule de dépôt (A) coïncidant pratiquement au niveau de son volume avec le volume de la cellule de formage (KV), la cellule de dépôt se présentant comme un cylindre et communiquant avec la cellule de formage (KV) de manière à ce que la cellule de dépôt (A) débouche sans transition dans la cellule de formage (KV), et que la masse de moulage soit acheminée à partir de la cellule de dépôt (A), au moyen d'un piston (S) mobile dans le sens axial dans la cellule de dépôt (A), jusqu'à la cellule de formage (KV), **caractérisé en ce que**
- au début du processus d'injection, le piston (S) se trouve à un premier point mort, auquel le fond du piston est aligné avec le bord de la cellule de dépôt (A) et avec la paroi de la cellule de formage de sorte qu'une faible quantité de masse de moulage fondue arrive directement à la cellule de formage (KV),
- le piston (S) coulisse alors dans le cylindre et la cellule de dépôt (A) devenant progressivement plus grande est ainsi remplie presque sans pression de masse de moulage fondue, jusqu'à ce que le piston (S) atteigne sa deuxième position de point mort et que l'acheminement de la masse de moulage fondue s'achève,
- le piston (S) se déplace ensuite pratiquement jusqu'à la première position de point mort et la cellule de formage (KV) est ainsi complètement remplie de masse de moulage et
- le piston (S) est amené à la première position de point mort pendant le temps d'arrêt.

2. Procédé de formage selon la revendication 1, **caractérisé en ce que**, au fur et à mesure que la trajectoire de déplacement du piston (S) de la deuxième position de point mort jusqu'à juste avant la première position de point mort augmente, la vitesse de déplacement diminue.

3. Procédé de formage selon la revendication 1 ou 2, **caractérisé en ce que** le volume maximal de la cellule de dépôt (A) est légèrement supérieur au volume de la cellule de formage (KV).

4. Procédé de formage selon la revendication 1, 2 ou 3, **caractérisé en ce que** la masse de moulage fondue arrive à la cellule de dépôt (A) par un canal (K) s'étendant à l'intérieur du piston (S) et débouchant dans le fond du piston.

5. Dispositif de dosage pour machines de formage avec une installation de préparation de la masse de moulage et avec une cavité de formage (KV) constituée d'une première et d'une deuxième plaque de formage (PF1, PF2), qui est remplie de masse de moulage, la sortie (E) de l'installation de préparation de la masse de moulage étant reliée avec une cellule de réception (A) à volume variable, dont le volume le plus important équivaut au moins au volume de la cavité de formage (KV), la cellule de réception (A) étant reliée au moyen d'un orifice avec la cavité de formage (KV) et étant pourvue, dans un fourreau entre la surface frontale d'un poinçon (S) qui, disposé de manière à pouvoir se déplacer en translation dans le fourreau, sert au déplacement de la masse de moulage de la salle de réception (A) jusqu'à la cavité de formage (KV ) et, pour le remplissage de la cellule de réception (A), d'un canal continu (K), et est formé par la cavité de formage (KV), lorsque le poinçon (S) prend une position arrière, et que la surface frontale du poinçon (S) affleure avec le bord de l'orifice, lorsque le poinçon (S) prend une position avant, **caractérisé en ce que** le poinçon (S) est en liaison mécanique rigide avec l'installation de préparation de masse de moulage (E), que le fourreau formé comme une composante de la première plaque de formage (PF1) dispose d'un premier orifice, dans lequel plonge le poinçon (S), et d'un deuxième orifice, qui est disposé en face du premier orifice et est relié directement avec la cavité de formage (KV), et que le poinçon (S) est muni d'une butée (M) qui, en position avant extrême du poinçon (S), repose sur le bord entourant le premier orifice du fourreau.

6. Dispositif de dosage selon la revendication 5, **caractérisé en ce que** le poinçon (S) est constitué, au moins à son extrémité libre, d'une matière conductrice de chaleur (WS).

7. Dispositif de dosage selon la revendication 5 ou 6, **caractérisé en ce que** le poinçon (S) est muni d'un échangeur de chaleur (KS) qui est intégré dans un circuit de refroidissement.

8. Dispositif de dosage selon la revendication 7, **caractérisé en ce que** l'échangeur de chaleur (KS) est couplé au niveau thermique au moins avec la surface frontale du poinçon (S).

9. Dispositif de dosage selon la revendication 7 ou 8, **caractérisé en ce que** le circuit de refroidissement est conçu de manière à pouvoir être réglé avec l'échangeur de chaleur (KS) intégré.

10. Dispositif de dosage selon une des revendications 5 à 9, **caractérisé en ce que** la deuxième plaque de formage (PF2) est constituée, au moins dans la zone faisant face au deuxième orifice du fourreau, d'une matière conductrice de chaleur (WF).

11. Dispositif de dosage selon une des revendications 5 à 10, **caractérisé en ce que** la deuxième plaque de formage (PF2) est munie d'un échangeur de chaleur (KF) qui est intégré dans un circuit de refroidissement.

12. Dispositif de dosage selon la revendication 11, **caractérisé en ce que** l'échangeur de chaleur (KF) est couplé au niveau thermique avec la zone constituée de matière conductrice de chaleur (WF) de la deuxième plaque de formage (PF2).

13. Dispositif de dosage selon la revendication 11 ou 12, **caractérisé en ce que** le circuit de refroidissement est conçu de manière à pouvoir être réglé avec l'échangeur de chaleur (KF) intégré.

14. Dispositif de dosage selon une des revendications 5 à 13, **caractérisé en ce que** qu'un écrou-raccord à tige vissé sur la sortie (ED) de l'installation de préparation de masse de moulage (E) sert de butée (M) au poinçon (S).

15. Dispositif de dosage selon une des revendications 5 à 14, **caractérisé en ce que** le deuxième orifice du fourreau est fermé de manière mécanique lorsque le poinçon (S) se met en position arrière extrême.

16. Dispositif de dosage selon une des revendications 5 à 15, **caractérisé en ce qu'**une multitude de fourreaux et un nombre tout aussi important de poinçons (S) sont prévus, les poinçons (S) sont fixés sur une barrette de canaux chauds (B), la barrette de canaux chauds (B) est reliée avec l'installation de préparation de masse de moulage, la barrette de canaux chauds (B) présente au moins un canal chaud (KH) dans lequel la sortie (ED) de l'installation de préparation de masse de moulage débouche, les canaux (K) des poinçons (S) sont reliés au canal chaud (KH) et la barrette de canaux chauds (B) constitue la butée mettant fin au mouvement relatif entre les poinçons (S) et les fourreaux.

17. Dispositif de dosage selon la revendication 16, **caractérisé en ce qu'**un canal chaud (KH) est prévu avec un nombre de sorties débouchant dans les canaux de poinçons (K) correspondant au nombre de poinçons (S) et de fourreaux.

18. Dispositif de dosage selon la revendication 16, **caractérisé en ce qu'**un nombre de canaux chauds (KH) disposés en étoile correspondant au nombre de poinçons (S) et de fourreaux relie l'embouchure de la sortie (ED) de l'installation de préparation de masse de moulage aux canaux de poinçons (K).

19. Dispositif de dosage selon la revendication 16, 17 ou 18, **caractérisé en ce que** la barrette de canaux chauds (B) est munie d'un dispositif de chauffage (HK).

20. Dispositif de dosage selon la revendication 19, **caractérisé en ce que** le dispositif de chauffage (HK) est réglable.
